# EUROPEAN PATENT APPLICATION

(11) **EP 4 800 523 A1**
(43) Date of publication of application: **02.09.2026**
(21) Application number: 25754929.5
(22) Date of filing: 16.01.2025
(51) Int. Cl.: G05D 23/13, H01M 10/633, G05D 23/19, H01M 10/613, H01M 10/615, H01M 10/643, H01M 10/6556, H01M 10/6568

(54) **TEMPERATURE CONTROL DEVICE**

(30) Priority: 15.02.2024 JP 2024020961
(71) Applicant: Toyo System Co., Ltd., Iwaki-shi, Fukushima 972-8316 (JP)
(72) Inventor: OMORI, Jun, Iwaki-shi, Fukushima 972-8316 (JP); YAMANOBE, Kenji, Iwaki-shi, Fukushima 972-8316 (JP); SHOJI, Hideki, Iwaki-shi, Fukushima 972-8316 (JP)
(74) Representative: Schön, Christoph
(86) International application number: PCT/JP2025/001116
(87) International publication number: WO 2025/173462

(57) **Abstract**

There is provided a temperature control device that is capable of properly adjusting a temperature of each of a plurality of test objects, and allows the plurality of test objects to be simultaneously tested for a plurality of temperature settings by using a test apparatus having a simple structure. A temperature control device 1 of the present invention adjusts temperatures of a plurality of test objects 9 and performs an evaluation test thereon. The temperature control device includes holders 8 that store the plurality of test objects 9 and heat exchange plates 2 through which temperature-adjusted heat media circulate. The temperatures of the heat media flowing into the heat exchange plates 2 are adjusted to predetermined temperatures by changing a ratio of the heat medium from a high-temperature-side heat medium tank 5a and the heat medium from a low-temperature-side heat medium tank 5b.

## Description

### Technical Field

The present invention relates to a temperature control device that is provided in a test apparatus that requires temperature management of test objects.

### Background Art

Conventionally, in a test of adjusting temperatures of test objects, there is known a temperature control device that adjusts the temperatures of the test objects via heat exchange plates through which heat media, whose temperatures are adjusted in heat medium tanks, circulate (e.g., see Patent Literature 1).

### Citation List

### Patent Literature

Patent Literature 1: Japanese Patent Application Laid-Open No. 2022-178211

### Summary of Invention

### Technical Problem

In the conventional temperature control device of this type, when simultaneously testing the test objects set to a plurality of temperatures to be adjusted by using heat media, it was necessary to prepare heat medium tanks that adjust the temperatures of the respective heat media to the set temperatures in accordance with the number of temperature settings.

However, providing the heat medium tanks by the number of the set temperatures presents disadvantages such as the increase in power consumption to maintain and change the temperature of thermal solvent, the increase in environmental temperature of a test room, and the increase in installation cost.

In view of the above disadvantages, an object of the present invention is to provide a temperature control device that can efficiently adjust temperatures of test objects to a plurality of temperature settings.

### Solution to Problem

To achieve the object, a temperature control device of the present invention, which adjusts temperatures of test objects to a plurality of set temperatures, includes: a plurality of holders that stores the test objects; a plurality of heat exchange plates through which temperature-adjusted heat media circulate; a high-temperature-side heat medium tank that supplies a heat medium having a temperature higher than the set temperatures to the heat exchange plates; and a low-temperature-side heat medium tank that supplies a heat medium having a temperature lower than the set temperatures to the heat exchange plates. Herein, temperatures of the heat media flowing into the plurality of heat exchange plates are adjusted to the plurality of different set temperatures by changing a mixing ratio of the heat medium of the high-temperature-side heat medium tank and the heat medium of the low-temperature-side heat medium tank. The holders are detachably attached to the heat exchange plates, and temperatures of the test objects stored in the respective holders are adjusted to the different set temperatures by heat from the heat exchange plates.

According to the present invention, by merely providing the high-temperature-side heat medium tank and the low-temperature-side heat medium tank, the temperatures of the plurality of heat exchange plates can be efficiently adjusted to the plurality of different set temperatures.

Furthermore, the plurality of heat exchange plates of the present invention is connected to the high-temperature-side heat medium tank and the low-temperature-side heat medium tank in parallel, and the mixing ratio of the heat medium from the high-temperature-side heat medium tank and the heat medium from the low-temperature-side heat medium tank to be supplied to the heat exchange plates is changed so that the heat exchange plates are set to plural types of temperatures from a high-temperature set temperature to a lower-temperature set temperature than it.

According to the present invention, by changing the mixing ratio of the heat medium from the high-temperature-side heat medium tank and the heat medium from the low-temperature-side heat medium tank, the plurality of heat exchange plates can be efficiently set to the plural types of set temperatures from the high-temperature set temperature to the lower-temperature set temperature than it.

Furthermore, in the present invention, the high-temperature-side heat medium tank is connected to each of the plurality of heat exchange plates in parallel, flow paths from the low-temperature-side heat medium tank are further connected to respective heat medium flow paths from the high-temperature-side heat medium tank to the heat exchange plates, and flow control valves are provided in both the flow paths, and the heat medium from the high-temperature-side heat medium tank and the heat medium from the low-temperature-side heat medium tank are mixed so that both the flow control valves are controlled by temperatures of temperature sensors provided on the heat exchange plates to become the plurality of set temperatures.

Furthermore, in the present invention, flow control valves provided in flow paths of the high-temperature-side heat medium tank and flow control valves provided in flow paths of the low-temperature-side heat medium tank are opened and closed in accordance with temperatures of temperature sensors provided on the heat exchange plates to mix the high-temperature heat medium and the low-temperature heat medium so that the heat exchange plates become predetermined temperatures.

According to the present invention, the temperatures of the heat exchange plates can be adjusted to the plurality of set temperatures with a simple structure.

Furthermore, in the present invention, among the heat media from the plurality of heat exchange plates to be set to plural types of the set temperatures from a high-temperature set temperature to a lower-temperature set temperature than it, the heat media of the plurality of heat exchange plates with high-temperature-side set temperatures are recirculated to the high-temperature-side heat medium tank, and the heat media of the plurality of heat exchange plates with low-temperature-side set temperatures are recirculated to the low-temperature-side heat medium tank.

Furthermore, in the present invention, return heat medium tanks to be connected to an upstream of a recirculation path of the high-temperature-side heat medium tank through which the heat media of the plurality of heat exchange plates with the high-temperature-side set temperatures recirculate and an upstream of a recirculation path of the low-temperature-side heat medium tank through which the heat media of the plurality of heat exchange plates with the low-temperature-side set temperatures recirculate are provided, and both the return heat medium tanks are connected by a pipeline so that the excessive heat medium in one return heat medium tank flows into another return heat medium tank among both the return heat medium tanks.

According to the present invention, the temperature management between the high-temperature-side heat medium tank and the low-temperature-side heat medium tank can be efficiently performed.

According to the present invention, because the temperature control device can simultaneously adjust the temperatures of the heat exchange plates that are set to the plural types of the set temperatures from the high-temperature set temperature to the lower-temperature set temperature than it while suppressing the number of heat medium tanks, it is possible to reduce the cost of installing the heat medium tanks, reduce the power consumption required for the heat medium tanks, and reduce the temperature increase in the environment due to the heat generation of the heat medium tanks. Moreover, because it is not necessary to change the set temperatures of the heat medium tanks every time the temperature settings of the heat exchange plates are changed, there is no need to wait for the heat media of the heat medium tanks to reach the set temperatures and thus the temperature settings of the test can be quickly switched.

Moreover, in the above invention, it is preferable that the above test performs a secondary battery charge/discharge test.

### Brief Description of Drawings

FIG. 1 is a perspective diagram illustrating a temperature control device according to an embodiment of the invention.
FIG. 2 is a perspective diagram illustrating a back side of the temperature control device according to the present embodiment.
FIG. 3 is an explanatory diagram illustrating a state where a holder is disassembled according to the present embodiment.
FIG. 4 is a circuit diagram illustrating circulation of heat media according to the present embodiment.
FIG. 5 is an explanatory diagram illustrating a temperature adjustment method of the heat media according to the present embodiment.
FIG. 6A is a flowchart illustrating a pre-test process according to the present embodiment.
FIG. 6B is a flowchart illustrating a temperature monitoring process according to the present embodiment.
FIG. 6C is a flowchart illustrating a temperature deviation determination process during a test according to the present embodiment.
FIG. 7 is a circuit diagram illustrating circulation of heat media according to another embodiment.
FIG. 8 is an explanatory diagram illustrating a return circulation circuit according to the other embodiment.

### Description of Embodiments

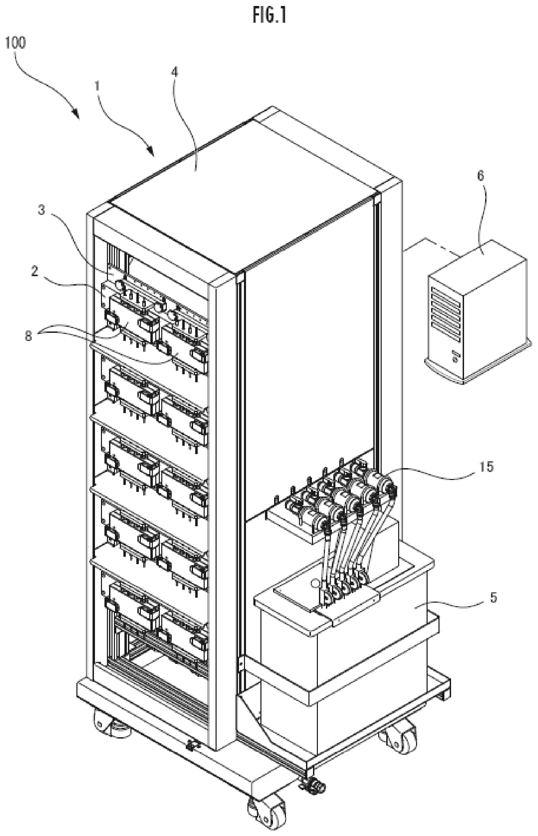

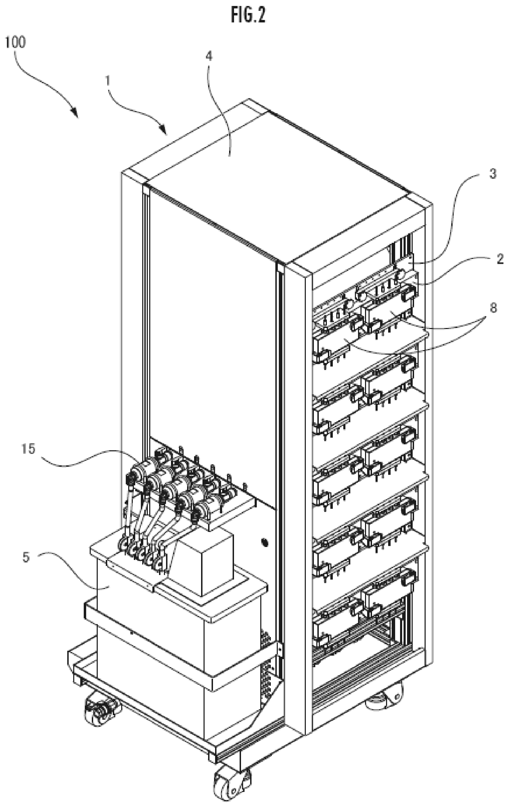

A temperature control device according to exemplary embodiments of the invention will be described with reference to the accompanying drawings. With reference to FIGS. 1 and 2, a temperature control device 1 according to the present embodiment is provided in a test apparatus 100 that requires temperature management of test objects 9. A test requiring the temperature management includes, for example, a secondary battery charge/discharge test in which a secondary battery is a test object.

The test apparatus 100 in which the temperature control device 1 according to the present embodiment is provided includes fixing plates 3 to which respective heat exchange plates 2 are fixed, a frame 4 that vertically aligns the fixing plates 3 and supports them on the front and back, and a plurality of heat medium tanks 5 that can adjust the temperatures of heat media to predetermined temperatures and supply them to the heat exchange plates 2.

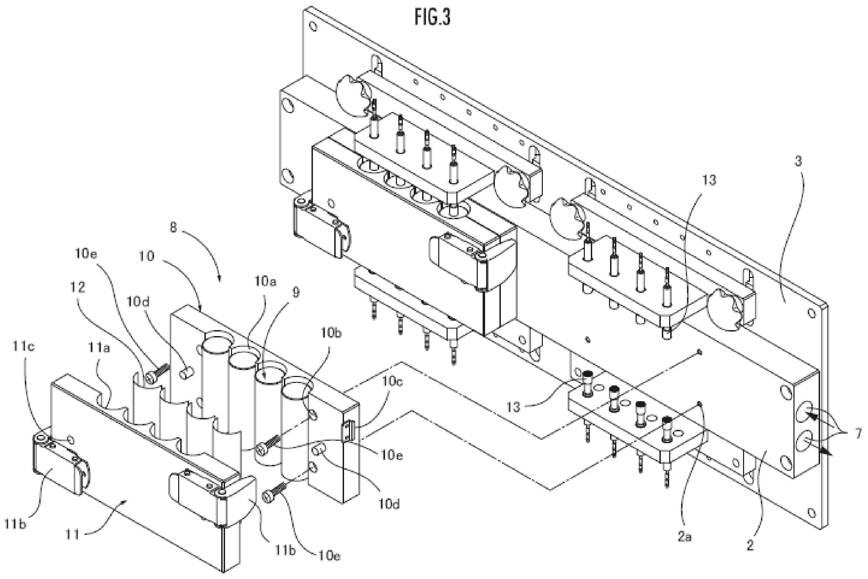

With reference to FIG. 3, the heat exchange plate 2 is provided with two flow paths 7 of a forward path and a return path through which a heat medium supplied from the heat medium tank 5 flows and that are arranged in parallel. Moreover, two holders 8 that store test objects are fixed to the one heat exchange plate 2 so as to straddle the two flow paths 7 in a detachable manner side by side from side to side.

With reference to FIG. 3, the holder 8 includes: a base 10 that has four recesses 10a with a circular arc cross-section that are spaces capable of storing in parallel the test objects 9 that are four cylindrical secondary batteries; and a cover 11 that has four recesses 11a with a circular arc cross-section and holds the test objects 9 between the recesses 10a and 11a so that the test objects 9 do not fall off the base 10.

Four screw holes 10b through which screws 10e can be inserted are provided in the base 10, and the base 10 is detachably screwed into female screws 2a of the heat exchange plate 2 by the screws 10e inserted through the screw holes 10b. Heat transfer sheets 12 are sandwiched between the base 10 and the test objects 9 and between the cover 11 and the test objects 9 so that the heat transfer is favorably performed without any gap as much as possible. When the test objects require the temperature adjustment and operations such as the charging/discharging as in a secondary battery, an opening may be provided in the holder 8 to attach an operation terminal 13 (charging/discharging terminal).

A hook 10c is provided on a side surface of the base 10. A snap lock 11b that can engage with the hook 10c is provided on the cover 11, and the cover 11 is detachably fixed to the base 10 by the snap lock 11b. Moreover, positioning pins 10d that protrude toward the cover 11 are provided on the base 10. Positioning holes 11c that can receive the positioning pins 10d are provided in the cover 11.

Because the heat exchange plates 2 are vertically arranged side by side in the test apparatus according to the present embodiment, the surfaces of the heat exchange plates 2 are vertically aligned, and thus a work of fixing the holder 8 to the heat exchange plate 2 or a work of fixing to the frame 4 the fixing plate 3 to which the heat exchange plate 2 and the holder 8 are fixed can be easily performed from one direction. Moreover, because the heat exchange plates 2 can be attached to the front and back of the frame 4, an installation space can be effectively utilized and thus the numerous test objects 9 can be tested with a compact apparatus.

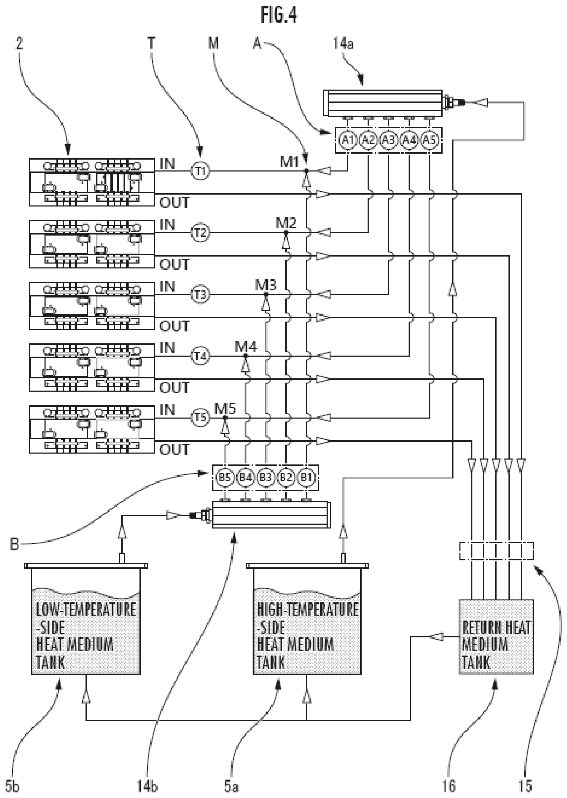

FIG. 4 illustrates a circulation circuit of the heat media according to the present embodiment. Note that, in FIG. 4, the number of the heat exchange plates 2 is five that is the half of the number of the heat exchange plates 2 illustrated in FIG. 1 for convenience of explanation. In a parallel circulation circuit according to the present embodiment, a heat medium supplied from a high-temperature-side heat medium tank 5a and a heat medium supplied from a low-temperature-side heat medium tank 5b are distributed to confluence points M1 to M5 with flow rates of the heat media respectively controlled by a high-temperature-side flow control valve block 14a and a low-temperature-side flow control valve block 14b. Then, the heat media discharged from the heat exchange plates 2 pass through a check valve 15 and are recirculated into a return heat medium tank 16, and then are recirculated into the high-temperature-side heat medium tank 5a and the low-temperature-side heat medium tank 5b to again adjust their temperatures. The test objects 9 held in the holder 8 are adjusted to a predetermined temperature by the heat medium via the heat exchange plate 2.

Moreover, inflow amounts of the heat medium discharged from the high-temperature-side heat medium tank 5a and the heat medium discharged from the low-temperature-side heat medium tank 5b, which are mixed at each of the confluence points M1 to M5, are controlled by a corresponding one of high-temperature-side flow control valves A1 to A5 and a corresponding one of low-temperature-side flow control valves B1 to B5, and the heat exchange plates 2 can be adjusted to different predetermined temperatures by controlling a ratio of the heat medium discharged from the high-temperature-side heat medium tank 5a and the heat medium discharged from the low-temperature-side heat medium tank 5b. The flow control valves are connected to a temperature controller 6 via a wired or wireless communication line through the flow control blocks 14 such as solenoid valves.

For example, when the heat exchange plate 2a is adjusted to 10°C, the heat exchange plate 2b is adjusted to 20 °C, the heat exchange plate 2c is adjusted to 30 °C, the heat exchange plate 2d is adjusted to 40 °C, and the heat exchange plate 2e is adjusted to 50 °C to simultaneously perform a test, the temperatures of the heat exchange plates 2 can be adjusted to predetermined temperatures by respectively setting the set temperature of the heat medium in the high-temperature-side heat medium tank 5a and the set temperature of the heat medium in the low-temperature-side heat medium tank 5b to 50 °C or more (e.g., 60 °C) and 10 °C or less (e.g., 0 °C) and by mixing both the heat media.

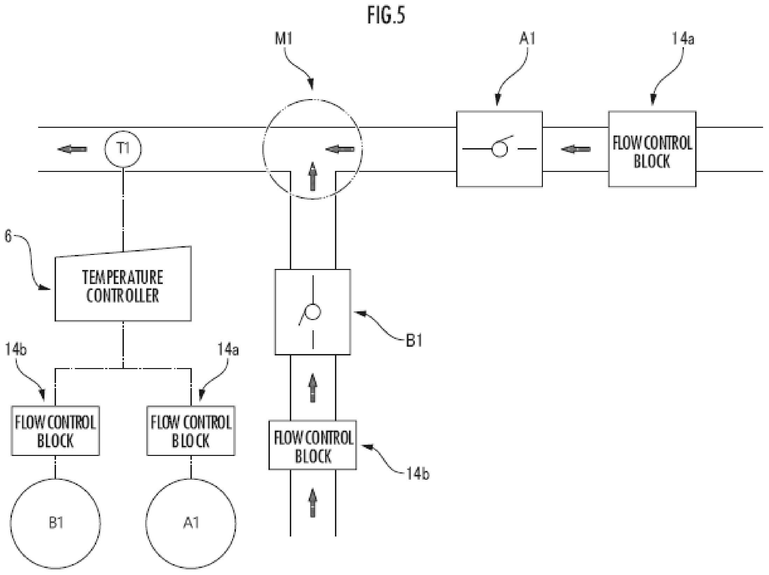

A temperature adjustment method of the heat media flowing into the heat exchange plates 2 will be described in more detail with reference to FIG. 5. Temperature sensors T1 to T5 are respectively provided downstream of the confluence points M1 to M5 to measure the temperatures of the heat media flowing into the heat exchange plates 2. Note that, although they are not illustrated, the temperature sensors T may be provided inside the heat exchange plates 2 or downstream of the heat exchange plates 2 if they are located downstream of the confluence points M. The measured temperatures of the heat media are transmitted to the temperature controller 6 that is connected to the temperature sensors via the wired or wireless communication line to perform a temperature monitoring process.

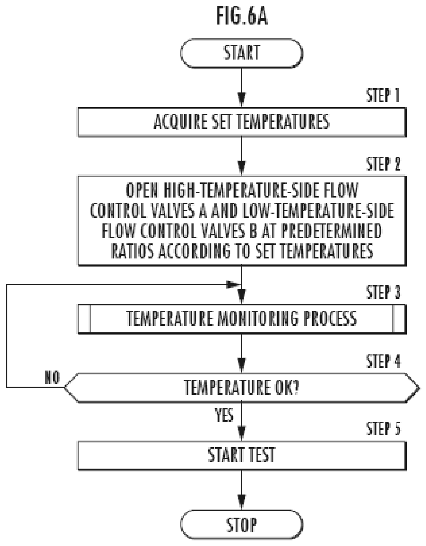

A pre-test process will be described with reference to a flowchart of FIG. 6A. After a user sets the set temperatures, the temperature controller 6 acquires set temperatures (STEP 1), and opens the high-temperature-side flow control valves A and the low-temperature-side flow control valves B at predetermined ratios previously set according to the set temperatures (STEP 2). After that, the temperature controller performs the temperature monitoring process (STEP 3), and, when the temperature monitoring process result is positive (STEP 4: YES), transmits a test start instruction to a test control device (not illustrated) to start a test (STEP 5). When the temperature monitoring process result is negative (STEP 4: NO), the temperature controller repeats the temperature monitoring process.

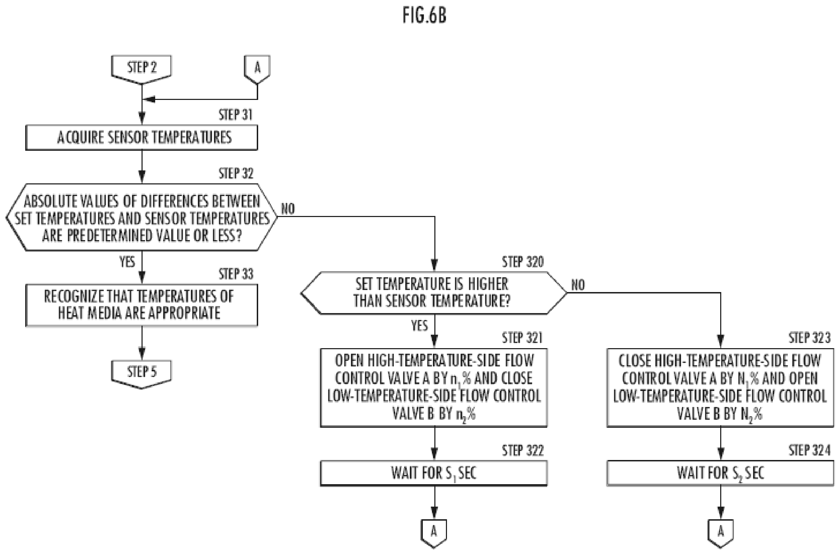

The details of the temperature monitoring process (STEP 3) will be described with reference to a flowchart of FIG. 6B. The temperature controller 6 acquires temperatures (hereinafter, they may be called sensor temperatures) of the heat media measured by the temperature sensors T (STEP 31), and determines whether the sensor temperatures are the same as the set temperatures or whether the sensor temperatures are within a predetermined range (STEP 32). When the sensor temperatures are the same as the set temperatures or are within the predetermined range, the temperature controller recognizes that the temperatures of the heat media are appropriate (STEP 33), maintains the flow rate setting for the heat media without change and terminates the temperature monitoring process, and proceeds to STEP 5. When the sensor temperature is lower than the set temperature, the temperature controller 6 instructs the high-temperature-side flow control valve A to be opened by a predetermined ratio (n₁%) according to a difference between the set temperature and the sensor temperature and the low-temperature-side flow control valve B to be closed by a predetermined ratio (n₂%) according to a difference between the set temperature and the sensor temperature (STEP 321). After a waiting time (S₁ sec) has elapsed (STEP 322), the temperature controller again performs the process from STEP 31. Moreover, when the sensor temperature is higher than the set temperature, the temperature controller 6 instructs the high-temperature-side flow control valve A to be closed by a predetermined ratio (N₁%) according to a difference between the set temperature and the sensor temperature and the low-temperature-side flow control valve B to be opened by a predetermined ratio (N₂%) according to a difference between the set temperature and the sensor temperature (STEP 323). After a waiting time (S₂ sec) has elapsed (STEP 324), the temperature controller again performs the process from STEP 31. The adjustment of the opening/closing ratios (n₁%, n₂%, N₁%, and N₂%) of each control valve according to the difference between the set temperature and the sensor temperature is controlled by, for example, a PI control method or a PID control method. The waiting times S₁ sec and S₂ sec may be the same or be different from each other, or the waiting times S₁ sec and S₂ sec may be predetermined times or be changed depending on the set temperatures. The test can be started in a state where the temperature adjustment of the heat media is completed by repeating the processes.

Moreover, the temperatures of the heat media can be adjusted while constantly maintaining the amounts of the heat media flowing into the heat exchange plates 2 by setting the sum of n₁% and n₂% and the sum of N₁% and N₂% to 100%.

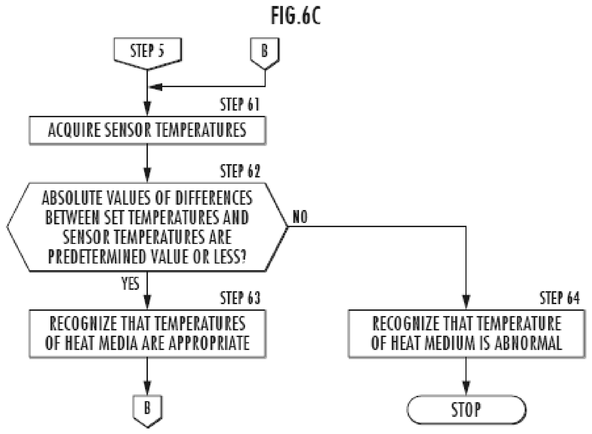

A temperature deviation determination process during the test will be described with reference to a flowchart of FIG. 6C. The temperature controller performs the temperature deviation determination process (STEP 6) at a timing set after the start of the test or an arbitrary timing. The temperature controller 6 acquires the sensor temperatures (STEP 61), and determines whether the sensor temperatures are the same as the set temperatures or are within the predetermined range (STEP 62). When the sensor temperatures are the same as the set temperatures or are within the predetermined range (STEP 62: YES), the temperature controller recognizes that the temperatures of the heat media are appropriate (STEP 63), and again performs the process from STEP 61. When the sensor temperature is different from the set temperature or is not within the predetermined range (STEP 62: NO), the temperature controller recognizes that the temperature of the heat medium is abnormal. It is possible to check whether there is a temperature deviation during the test by accumulating the processing results and the sensor temperatures during processing. Moreover, when an abnormality is detected in any one of the steps described in FIGS. 6A to 6C, the test may be terminated. For example, the abnormality includes the inability to acquire the sensor temperature, the recognition of the temperature abnormality of the heat medium, the recognition of the temperature abnormality of the heat exchange plate 2 caused by the decrease in a water level (flow rate) due to the abnormality of a chiller, and the like.

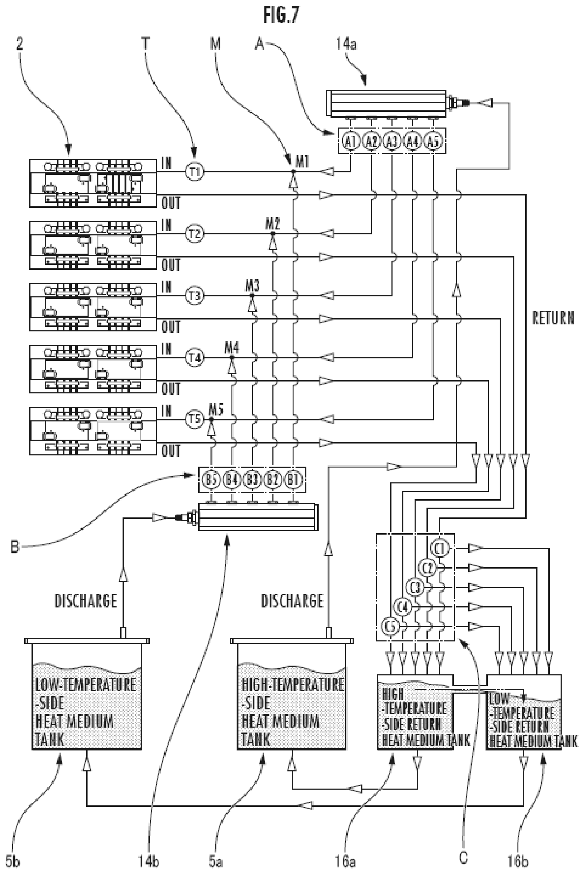

The explanation for configurational components having the same reference numbers is omitted and the other embodiment will be described with reference to FIG. 7. By operating return heat medium control valves C1 to C5, it is possible to select which of a high-temperature-side return heat medium tank 16a and a low-temperature-side return heat medium tank 16b the heat media recirculated from the heat exchange plates 2 are recirculated to. The return heat medium control valves C1 to C5 may be operated by the user, or may be operated by a return heat medium controller 17 that is connected to the return heat medium control valves C1 to C5 via a wired or wireless communication line through a flow control valve block 14c. The return heat medium controller 17 determines which of the set temperatures of the high-temperature-side heat medium tank 5a and the low-temperature-side heat medium tank 5b the temperatures measured by the temperature sensors T1 to T5 are close to, and controls the return heat medium control valves C1 to C5 so that the heat media are recirculated to any one of the high-temperature-side return heat medium tank 16a and the low-temperature-side return heat medium tank 16b. With this configuration, it is possible to suppress power consumption required to return the heat media recirculated to the heat medium tanks 5 to the set temperatures.

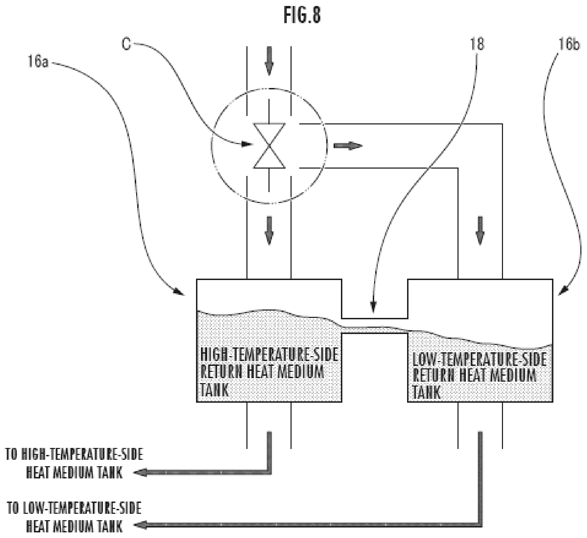

The flow of the heat media to recirculate to the return heat medium tanks 16 will be described in more detail with reference to FIG. 8. These tanks 5 and 16 are connected so that the heat media flowing into the high-temperature-side return heat medium tank 16a by the return heat medium control valves C1 to C5 are recirculated to the high-temperature-side heat medium tank 5a, and the heat media flowing into the low-temperature-side return heat medium tank 16b by the valves are recirculated to the low-temperature-side heat medium tank 5b. At this time, when the heat media unevenly flow into any one of the high-temperature-side return heat medium tank 16a and the low-temperature-side return heat medium tank 16b, in order to prevent the heat media from flowing backward to the heat exchange plates 2, the high-temperature-side return heat medium tank 16a and the low-temperature-side return heat medium tank 16b are connected by an overflow prevention pipe 18 so that the heat medium flows into the other return heat medium tank when the volume of the heat medium accommodated in one return heat medium tank reaches a certain level or more. It is possible to prevent the heat medium from overflowing from the return heat medium tanks 16 while suppressing the volume of each of the return heat medium tanks by providing the overflow prevention pipe 18. The temperature controller 6 and the return heat medium controller 17 mean processor(s) configured of an arithmetic processing unit such as a central processing unit (CPU), a memory, an input/output (I/O) device, and the like, and may be configured of the same device or may be configured of different devices.

### Description of Reference Numerals

1 ... temperature control device, 2 ... heat exchange plate, 2a ... female screw, 3 ... fixing plate, 4 ... frame, 5 ... heat medium tank, 5a ... high-temperature-side heat medium tank, 5b ... low-temperature-side heat medium tank, 6 ... temperature controller, 7 ... flow path, 8 ... holder, 9 ... test object, 10 ... base, 10a ... recess, 10b ... screw hole, 10c ... hook, 10d ... positioning pin, 10e ... screw, 11 ... cover, 11a ... recess, 11b ... snap lock, 11c ... positioning hole, 12 ... heat transfer sheet, 13 ... operation terminal, 14 ... flow control block, 14a ... high-temperature-side flow control valve block, 14b ... low-temperature-side flow control valve block, 15 ... check valve, 16 ... return heat medium tank, 16a ... high-temperature-side return heat medium tank, 16b ... low-temperature-side return heat medium tank, 18 ... overflow prevention pipe, 100 ... test apparatus, T ... temperature sensor, M ... confluence point, A ... high-temperature-side flow control valve, B ... low-temperature-side flow control valve, C ... return heat medium control valve

## Claims

1. A temperature control device that adjusts temperatures of test objects to a plurality of set temperatures, the device comprising:
a plurality of holders that stores the test objects;
a plurality of heat exchange plates through which temperature-adjusted heat media circulate;
a high-temperature-side heat medium tank that supplies a heat medium having a temperature higher than the set temperatures to the heat exchange plates; and
a low-temperature-side heat medium tank that supplies a heat medium having a temperature lower than the set temperatures to the heat exchange plates, wherein
temperatures of the heat media flowing into the plurality of heat exchange plates are adjusted to the plurality of different set temperatures by changing a mixing ratio of the heat medium of the high-temperature-side heat medium tank and the heat medium of the low-temperature-side heat medium tank, and
the holders are detachably attached to the heat exchange plates, and temperatures of the test objects stored in the respective holders are adjusted to the different set temperatures by heat from the heat exchange plates.

2. The temperature control device according to Claim 1, wherein
the plurality of heat exchange plates of the present invention is connected to the high-temperature-side heat medium tank and the low-temperature-side heat medium tank in parallel, and
the mixing ratio of the heat medium from the high-temperature-side heat medium tank and the heat medium from the low-temperature-side heat medium tank to be supplied to the heat exchange plates is changed so that the heat exchange plates are set to plural types of temperatures from a high-temperature set temperature to a lower-temperature set temperature than it.

3. The temperature control device according to Claim 2, wherein
the high-temperature-side heat medium tank is connected to each of the plurality of heat exchange plates in parallel,
flow paths from the low-temperature-side heat medium tank are further connected to respective heat medium flow paths from the high-temperature-side heat medium tank to the heat exchange plates, and
flow control valves are provided in both the flow paths, and the heat medium from the high-temperature-side heat medium tank and the heat medium from the low-temperature-side heat medium tank are mixed so that both the flow control valves are controlled by temperatures of temperature sensors provided on the heat exchange plates to become the plurality of set temperatures.

4. The temperature control device according to Claim 2, wherein flow control valves provided in flow paths of the high-temperature-side heat medium tank and flow control valves provided in flow paths of the low-temperature-side heat medium tank are opened and closed in accordance with temperatures of temperature sensors provided on the heat exchange plates to mix the high-temperature heat medium and the low-temperature heat medium so that the heat exchange plates become predetermined temperatures.

5. The temperature control device according to Claim 1, wherein among the heat media from the plurality of heat exchange plates to be set to plural types of the set temperatures from a high-temperature set temperature to a lower-temperature set temperature than it, the heat media of the plurality of heat exchange plates with high-temperature-side set temperatures are recirculated to the high-temperature-side heat medium tank, and the heat media of the plurality of heat exchange plates with low-temperature-side set temperatures are recirculated to the low-temperature-side heat medium tank.

6. The temperature control device according to Claim 5, wherein return heat medium tanks to be connected to an upstream of a recirculation path of the high-temperature-side heat medium tank through which the heat media of the plurality of heat exchange plates with the high-temperature-side set temperatures recirculate and an upstream of a recirculation path of the low-temperature-side heat medium tank through which the heat media of the plurality of heat exchange plates with the low-temperature-side set temperatures recirculate are provided, and both the return heat medium tanks are connected by a pipeline so that the excessive heat medium in one return heat medium tank flows into another return heat medium tank among both the return heat medium tanks.

7. The temperature control device according to any one of Claims 1 to 6, wherein the test includes a secondary battery charge/discharge test.
